# EUROPEAN PATENT SPECIFICATION

(11) **EP 0 825 101 B1**
(45) Date of publication and mention of the grant of the patent: **23.06.2004**
(21) Application number: 97113854.0
(22) Date of filing: 11.08.1997
(51) Int. Cl.: B62M 23/02

(54) **Electric bicyle**
Fahrrad mit elektrischem Hilfsmotor
Bicyclette à assistance électrique

(30) Priority: 14.08.1996 JP 21397296
(43) Date of publication of application: 25.02.1998
(73) Proprietor: MATSUSHITA ELECTRIC INDUSTRIAL CO., LTD., Kadoma-shi, Osaka-fu (JP)
(72) Inventor: Wada, Masami, 1006, Oaza Kadoma, Kadoma-shi, Osaka-fu (JP); Kamada, Yasushi, 1006, Oaza Kadoma, Kadoma-shi, Osaka-fu (JP)
(74) Representative: Grünecker, Kinkeldey, Stockmair & Schwanhäusser Anwaltssozietät

(56) References cited:
- EP-A- 0 675 037
- EP-A- 0 800 988
- DE-A- 3 117 415

## Description

The present invention relates an electric bicycle with the features of the precharacterizing part of claim 1.

There have been provided various types of electric bicycles using a driving force produced by human power and a driving force produced by an electric motor driving unit, which driving forces work in parallel, said electric motor driving unit having the function of assisting in the manual driving force within a prescribed range.

The electric motor driving unit of a conventional electric bicycle comprises an electric motor, a speed reducer, a torque detector, and a speed detector. This electric motor driving unit is disposed under the bicycle sheet pipe and controlled by circuit separately disposed in the vicinity of the sheet pipe or main pipe, see Japanese Patent Kokai Hei 4-244496 and 6-07266. The electric motor driving unit and the circuit are electrically connected together with a cover.

Further, there is an electric bicycle comprising a disk-shaped casing installed on a hub shaft, within which disk-shaped casing are housed a speed reducer, a torque detector, a speed detector, and a circuit, see Japanese Patent Kokai Hei 5-262273.

EP-A-0800988 (which forms part of the prior art according to article 54 (3) EPC) discloses an electric bicycle with the features of the precharacterizing part of claim 1. Bicycle comprises a pedal drive mechanism and an electric drive mechanism. The electric drive mechanism includes a drive unit with an airtight housing in which a chamber is formed. This chamber accommodates various elements, as for example, a motor, a speed reducer, a sensor, a control circuit, etc. All these elements are integrally accommodated in the chamber of the housing wherein this housing is arranged in the region of the crank shaft.

JP-A-6107266 discloses bicycle with case. Within this case, the crank shaft is arranged at which ends two crank arms are fixed. An electric motor is also arranged in this region near the crank shaft as well as a speed detector and a force sensor. A controller is not arranged in the region of the crank shaft but near the head tube.

DE-A-3117415 discloses a chainless drive for a bicycle with an electric motor that may be switched on by the operator and which has at least two stages to change the velocity of the bicycle. The corresponding electric motor is arranged within a two-part housing together with the planetary gear unit and all these parts are arranged in the region of the crank shaft. The switch for switching on and off of the electric motor is also provided wherein a lever is used for selecting the corresponding transmission rate. The planetary gear drive unit includes a ring gear, sun gear, and planet wheels.

It is an object of the invention to improve the electric bicycle in that the box or casing and, in particular, its lid is used as a heat sink such that the electric motor driving unit is not overheated. This object is solved by the features of claim 1.

Advantageous embodiments are disclosed in the subclaims.

For example, using a metal box provides a shielding effect to shield the circuit inside the box from noise.

By providing a ridge along the outer periphery of the circuit, potting operation for pouring and curing resin for circuit protection is facilitated.

By effecting the wiring through an integrally molded box, the individual wires are shorter and electrical loses are decreased.
Fig. 1 shows an embodiment of the invention, being a side view, in longitudinal section, of an electric motor driving unit, taken along line A - A in each of Figs. 3, 4 and 5;
Fig. 2 is a side view of an electrical bicycle;
Fig. 3 is a side view of the electric motor driving unit according to Fig. 1;
Fig. 4 is a fragmentary side view of the electric motor driving unit taken from the motor cover;
Fig. 5 is a side view of the electric motor driving unit with the lid having said circuit attached thereto being removed, and
Fig. 6 is a perspective view of the lid having said circuit attached thereto.

An embodiment of the invention will now be described with reference to the drawings.

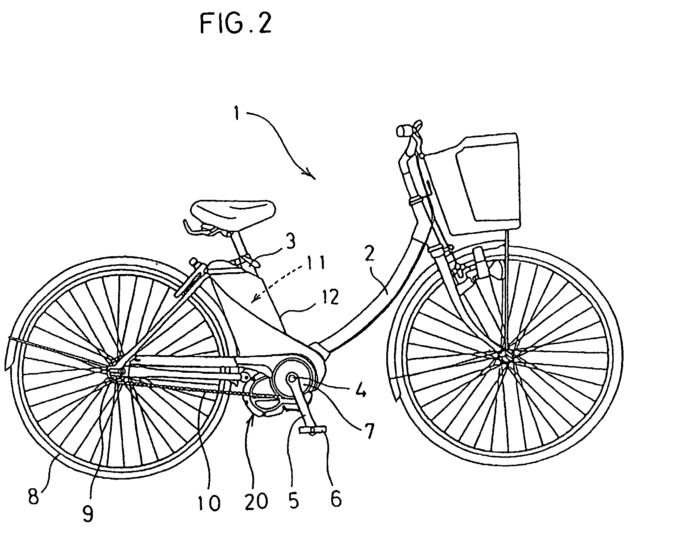

In Fig. 2, an electric bicycle 1 designed to have the manual pedaling force assisted by the electric motor driving unit comprises a main pipe 2, a sheet pipe 3, a crank 5 connected to a crank shaft 4, a pedal 6 attached to said crank 5, a sprocket 7 attached to the crank shat 4, a rear wheel sprocket 9 attached to a rear wheel 8, a chain 10 mounted between the sprockets 7 and 9, a battery case 12 having a battery 11 stored therein, and an electric motor driving unit 20 integrally constructed in the region of the crank shaft located under the vehicle body center.

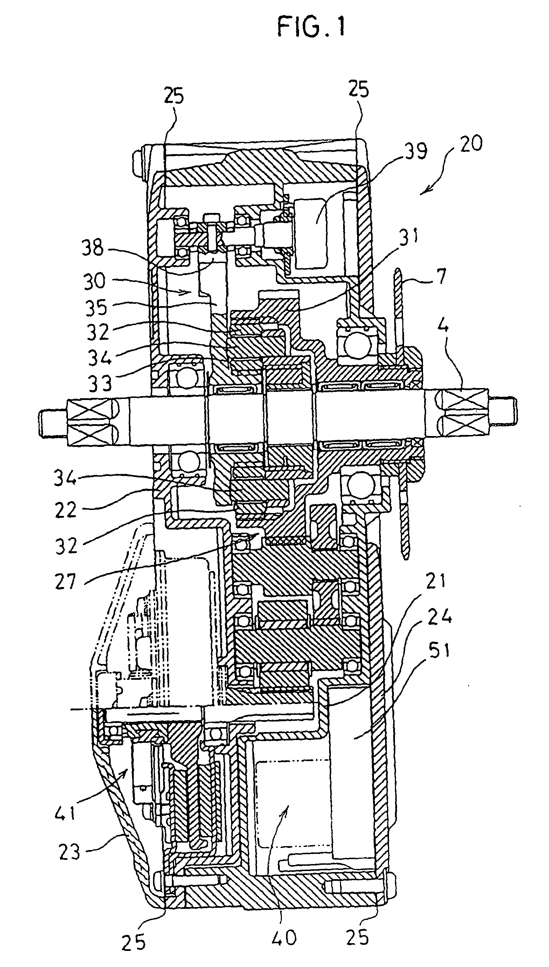

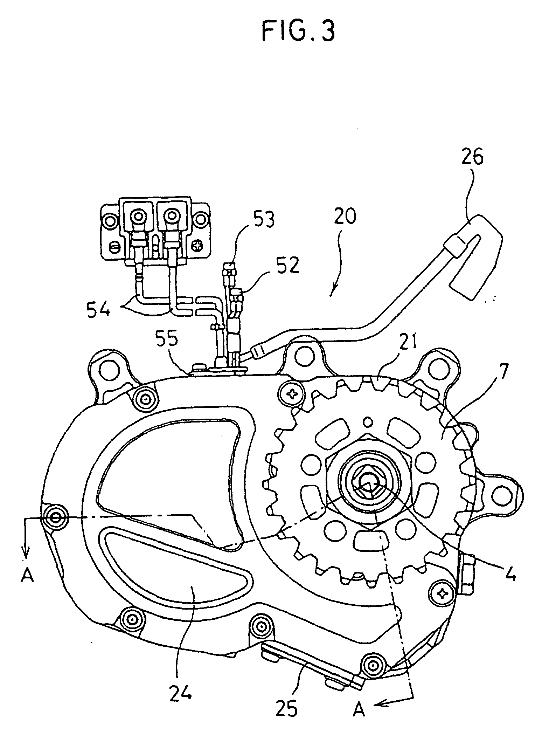

In Figs. 1, 3 through 5, the case of the electric motor driving unit 20 is comprised of a box 21, a gear cover 22, a motor cover 23, and a lid 24. These components are sealed by a gasket 25, the electric motor driving unit 20 being of waterproof construction. However, changes in the pressure in the case due to temperature changes are eliminated by the use of a breathing pipe 26.

Housed in the case defined by said box 21 and gear cover 22 are a speed reducer 27, a torque detector 30 and a speed detector 42. Further, in the area of the case defined by the recess of the gear cover 22 and the cover 23, there is housed a flat type electric motor 41. In addition, making the electric motor 41 flat makes it easier to secure the space for storing control circuit 40 in the box 21.

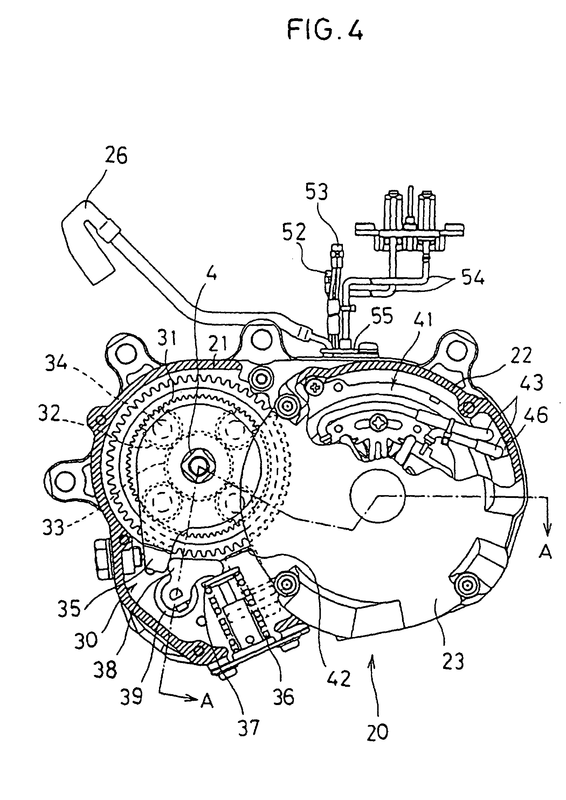

The torque detector 30 housed in said electric motor driving unit 20 detects the manual pedaling force which is transmitted to the crank shaft 4 through the pedal 6 and crank 5. The torque detector 30, as shown in Figs. 1 and 4, is a detector using a planetary gear type differential mechanism which comprises an internal gear 31, a plant gear 32 and a sun gear 33, the manual torque transmitted to the crank shat 4 being transmitted to a carrier 34. And the internal gear 31 is connected to said sprocket 7.

Thereby, the load from the rear wheel 8 is transmitted to the sprocket 7 through the rear wheel sprocket 9 and chain 10, and then directly to the internal gear 31. And when the internal gear 31 is thus loaded, a rotating force is produced in the sun gear 33 on the principle of planetary differential gear mechanisms, said rotating force being transmitted to an arm 35 attached to said sun gear 33. This force and the repulsive force of a spring 36 are transmitted to an angle detecting arm 38 through a spring support 37.

When said two forces balance each other, the amount of manual rotation approximately proportional to the manual torque is converted into a voltage value by using a potentiometer 39, thereby detecting the torque. Depending on the this detected torque, assistance in driving force is effected within the specified range by the circuit 40 housed in the electric motor driving unit 20. In addition, the current for the circuit 40 and electric motor 41 is supplied from the battery 11 stored in battery case 12.

Thereby, the driving force produced by the electric motor 41 is added to the manual pedaling force through the speed reducer 27 and transmitted to the sprocket 7. This rotating force transmitted to the sprocket 7 is then transmitted to the rear wheel 8 through the chain 10 and rear wheel sprocket 8. Further, the speed detector 42 detects the rpm by means of the ridges and recesses of the gear, and the driving force of the electric motor 41 is controlled according to the schedule by the circuit 40.

As shown in Fig. 1, the circuit 40 is housed in the case defined by the lid 24 and the box 21 in the region where the electric motor 41 is housed, the circuit 40 being attached to the back of the lid 24. Within this case, the lead 43 of the electric motor 41, the lead 44 of the potentiometer 39 of the torque detector 30 and the lead 45 of the speed detector 42 are connected to the circuit 40.

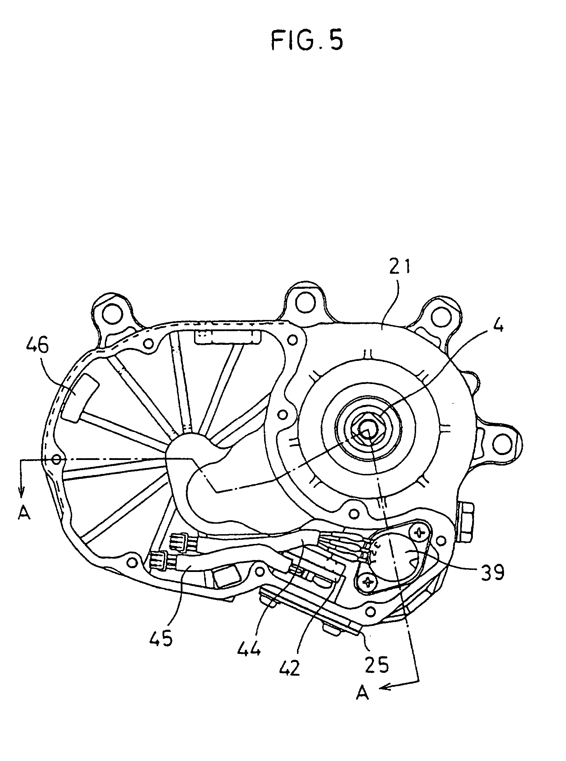

As shown in Figs. 4 and 5, the box 21 and the gear cover 22 are formed with a through-hole 46 which connects the case defined by the gear cover 22 and motor cover 23 to the case defined by the box 21 and lid 24, thereby effecting the wiring between the lead 43 of the electric motor 43 and the circuit 40.

In this manner, the electric motor driving unit 20 has its components, i.e., the electric motor 41, speed reducer 27, torque detector 30 for detecting the pedaling force, speed detector 42 for detecting the vehicle speed, and the circuit 40 for controlling said electric motor 41, integrally constructed.

In Fig. 1, the box 21, gear cover 22, motor cover 23 and lid 24 are formed by aluminum die casting (an example of metal). Therefore, since the circuit 40 is stored in the case defined by the aluminum box 21 and aluminum lid 24, the shield effect prevents malfunction due to external noise. Further, this construction, which is immune to external noise, hardly sends out noise.

And the torque detector 30 and speed detector 42 are connected to the circuit 40 within said case by the potentiometer lead 44 and speed detector lead 45. Since the wiring is effected within the metal case in this manner, it is possible to prevent noise from getting on the leads and to prevent the torque detector 30 and speed detector 42 from malfunctioning.

Further, since the electric motor driving unit 20 is integrally covered with the metal box 21 and covers 22, 23, it has a sufficient strength to withstand external impact load. Particularly, since the circuit 40 is protected by the metal lid 24, it is no longer necessary to attach a resin cover to effect wiring between the circuit 40 and the leads 43, 44, 45.

Thus, as a result of this arrangement in which the box having the electric motor 41, speed reducer 27, torque detector 30, speed detector 42 and circuit 40 installed therein is integrally made of metal, effects are obtained that the strength is high, that there is no need for preparing a protective cover for covering the circuit 40, and that the circuit 40 is shielded from noise.

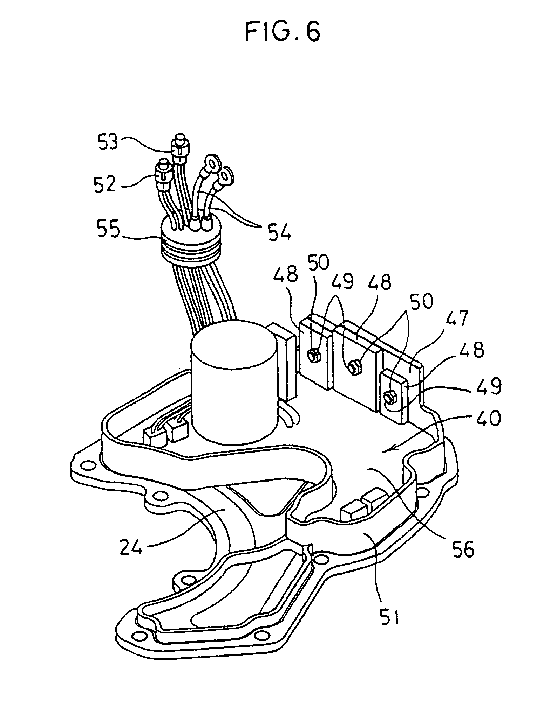

In Fig. 6, the circuit 40 is fixed in position in that power elements 48 soldered to the circuit 40 are contacted with the power element attaching surface of the lid 24 and fixed thereto by bolts 49 and nuts 50. In addition, for protection of the circuit 40, resin is filled in the circuit section's outer peripheral ridge 51. The numeral 52 denotes a key switch connector; 53 denotes an LED light connector; and 54 denotes battery terminals. The numeral 55 denotes a grommet for waterproofness, attached to the box 21.

As a result of this arrangement in which the circuit 40 installed in the integrally constructed box 21 is attached to the inner side of the lid 24 with respect to the space in which it is installed, an effect is obtained that the operation of attaching the circuit 40 is satisfactory. That is, since the power element attaching surface 47 projects from the lid 24, attachment of the circuit 40 is facilitated. Further, since the power element attaching surface 47 is stored in the box 21, there is no need to take measures for waterproofness and exchange of the circuit 40 is made possible simply by exchanging the lid 24.

In Fig. 6, by attaching the power element 48 in direct contact with the power element attaching surface 47 which is part of the metal lid 24, the power element attaching surface 47 and the lid 24 in its entirety can be used as a radiator, contributing much to heat dissipation. In addition, the same effect can also be obtained by attaching the power element 48 to the flat surface of the metal lid 24, not to the ridge, in parallel with the base plate 56.

Thus, as a result of this arrangement in which the power element 48 of the circuit section is assembled such that it is in direct contact with the metal lid 24, an effect is obtained that this metal lid 24 can be used as a radiator.

In Fig. 6, by forming the lid 24 with the integral, circuit section's outer peripheral ridge 51 conforming to the shape of the circuit 40, for protection of the circuit 40, it is possible to facilitate the potting operation of pouring and curing resin. And since the resin is filled in the box defined by the circuit section's outer peripheral ridge 51, the resin can be efficiently and easily poured without flowing outside.

Thus, as a result of this arrangement in which the inside of the lid 24 having the circuit 40 installed thereon is integrally formed with the ridge 51 around the circuit section, an effect is obtained that the potting operation for protection of the circuit 40 is facilitated.

In Fig. 5, since the potentiometer 39 of the torque detector 30 and the speed detector 42 are disposed within the case defined by the box 21 and lid 24, they can be easily connected to the circuit 40, which is installed on the lid 24, by the respective leads 44 and 45 of the potentiometer 39 and speed detector 42.

Thus, as a result of this arrangement in which the wires 43, 44, 45 for electrically connecting the electric motor 41, torque detector 30, speed detector 42 and circuit 40, effects are obtained that the wires 43, 44, 45 can be made shorter and that there is little electrical loss.

## Claims

1. An electric bicycle of the type in which the manual pedaling force is assisted by an electric motor driving unit (20) comprising an electric motor (41), a speed reducer (27), a torque detector (30) for detecting the pedaling force, a vehicle speed detector (42) for detecting the vehicle speed, and a circuit (40) for controlling said electric motor, these components being integrally constructed in the region of the crank shaft (4), **characterized in that** said circuit (40) installed in a box (21) is attached to the inside of a lid (24) of the box with respect to the space in which it is installed, wherein the circuit (40) is assembled such that its power element (48) contacts the lid (24).

2. The electric bicycle according to claim 1, **characterized in that** said box (21) having installed therein the electric motor (41 ), speed reducer (27), torque detector (30), speed detector (42), and circuit (40) is integrally made of metal.

3. The electric bicycle according to claim 1 or 2, **characterized in that** the inside of the box (21 in which the circuit (40) is installed is integrally formed with a ridge (51) along the outer periphery of the circuit (40).

4. The electric bicycle according to one of the previous claims, **characterized in that** the wiring for electrically connecting the electric motor (41 ), torque detector (30), speed detector (42), and circuit (40) is effected through the integrally molded box.

## Patentansprüche

1. Elektrofahrrad des Typs, bei dem die Pedal-Tretkraft durch eine Elektromotor-Antriebseinheit (20) unterstützt wird, die einen Elektromotor (41), ein Reduktionsgetriebe (27), einen Drehmomentdetektor (30), der die Pedal-Tretkraft erfasst, einen Fahrzeuggeschwindigkeitsdetektor (42), der die Fahrzeuggeschwindigkeit erfasst, und eine Schaltung (40) umfasst, die den Elektromotor steuert, wobei diese Bestandteile integral im Bereich der Kurbelwelle (4) eingebaut sind, **dadurch gekennzeichnet, dass** die Schaltung (40), die in einem Kasten (21) installiert ist, an der Innenseite eines Deckels (24) des Kastens in Bezug auf den Raum, in dem sie installiert ist, angebracht ist, wobei die Schaltung (40) so montiert ist, dass ihr Antriebselement (48) mit dem Deckel (24) in Kontakt ist.

2. Elektrofahrrad nach Anspruch 1, **dadurch gekennzeichnet, dass** der Kasten (21), in dem der Elektromotor (41), das Reduktionsgetriebe (27), der Drehmomentdetektor (30), der Geschwindigkeitsdetektor (42) und die Schaltung (40) installiert sind, integral aus Metall besteht.

3. Elektrofahrrad nach Anspruch 1 oder 2, **dadurch gekennzeichnet, dass** die Innenseite des Kastens (21), in dem die Schaltung (40) installiert ist, integral mit einem Steg (51) am Außenumfang der Schaltung (40) ausgebildet ist.

4. Elektrofahrrad nach einem der vorangehenden Ansprüche, **dadurch gekennzeichnet, dass** die Verdrahtung, die den Elektromotor (41), den Drehmomentdetektor (30), den Geschwindigkeitsdetektor (42) und die Schaltung (40) elektrisch verbindet, durch den integral geformten Kasten ausgeführt ist.

## Revendications

1. Bicyclette électrique du type dans lequel la force de pédalage humaine est assistée par une unité d'entraînement par moteur électrique (20) comprenant un moteur électrique (41) un réducteur de vitesse (27) un détecteur de couple (30) destiné à détecter la force de pédalage, un détecteur de vitesse du véhicule (42) destiné à détecter la vitesse du véhicule, et un circuit (40) destiné à commander ledit moteur électrique, ces composants étant assemblés en un seul bloc dans la région de l'axe de pédalier (4), **caractérisée en ce que** ledit circuit (40), mis en place dans un boîtier (21), est fixé à la face intérieure d'un couvercle (24) du boîtier par rapport à l'espace dans lequel il est mis en place, dans lequel le circuit (40) est assemblé de telle manière, que son élément de puissance (48) est en contact avec le couvercle (24).

2. Bicyclette électrique selon la revendication 1, **caractérisée en ce que** ledit boîtier (21) à l'intérieur duquel sont mis en place le moteur électrique (41), le réducteur de vitesse (27), le détecteur de couple (30), le détecteur de vitesse (42), et le circuit (40), est réalisé en métal, d'un seul bloc.

3. Bicyclette électrique selon la revendication 1 ou 2, **caractérisée en ce que** l'intérieur du boîtier (21), dans lequel le circuit (40) est mis en place, est formé d'un seul bloc avec un rebord (51) le long de la périphérie extérieure du circuit (40).

4. Bicyclette électrique selon l'une des revendications précédentes, **caractérisée en ce que** le câblage destiné à relier électriquement le moteur électrique (41), le détecteur de couple (30), le détecteur de vitesse (42), et le circuit (40) est réalisé par l'intermédiaire du boîtier moulé d'un seul bloc.
